# EUROPEAN PATENT SPECIFICATION

(11) **EP 0 970 607 B1**
(45) Date of publication and mention of the grant of the patent: **07.04.2004**
(21) Application number: 99202127.9
(22) Date of filing: 30.06.1999
(51) Int. Cl.: A01K 31/04, A01K 1/015, A01K 5/02

(54) **Poultry caging system and method for keeping poultry**
Käfiganlage für Geflügel und Verfahren zur Geflügelzucht
Système de cages pour volailles et procédé pour l'élevage de volailles

(30) Priority: 30.06.1998 NL 1009523
(43) Date of publication of application: 12.01.2000
(73) Proprietor: Jansen Poultry Equipment B.V., 3771 MB Barneveld (NL)
(72) Inventor: Schwagermann, Leendert Quirinius, 3791 VE Achterveld (NL)
(74) Representative: Van den Heuvel, Henricus Theodorus

(56) References cited:
- EP-A- 0 395 179
- EP-A- 0 612 468
- EP-A- 0 852 211
- WO-A-98/24303
- DE-C- 924 907
- FR-A- 727 659
- FR-A- 2 424 208
- FR-A- 2 704 779
- GB-A- 1 412 537
- US-A- 3 638 617
- US-A- 4 508 061

## Description

The invention relates to a poultry caging system comprising: a device for supplying litter such as for instance sand, dust, sawdust, peat dust and/or free-range feed to poultry caging systems, said device comprising: a container for holding litter, a conveyor connecting onto the container for transporting litter supplied from the container, at least one feed opening connecting onto the conveyor, which feed opening forms a delivery point for litter, and an at least substantially litter-tight floor part, wherein the feed opening of the supply device lies above the floor part. The invention also relates to a method for keeping poultry, comprising the steps of: placing the poultry in separated spaces, supplying litter to the separate spaces, and discharging the litter used by the poultry from the separate spaces.

Systems exist for housing poultry, such as for instance chickens, wherein the animals have at their disposal a fixed free-range area. An example hereof is for instance a free-range house provided with laying nests. A drawback here is that the productivity per unit of area is limited. Another drawback is that the fixed free-range areas are breeding grounds for bacteria, fungi and other germs, while many ground eggs are moreover laid in the traditional free-range areas. In order to increase productivity, poultry housing systems have been developed in which the poultry are accommodated in stacked layers or levels. Examples hereof are batteries, cage housings and so on. The most significant drawback of such systems is that these have a more or less adverse effect on animal welfare. This can result in aggressive behaviour or otherwise aberrant behaviour. Particularly in western markets there are market pressures to keep poultry in a more animal-friendly manner. Welfare criteria include among others the option of foraging, the percentage of fat in plumage and the diversity of the environment.

The French patent publication FR 727.659 discloses a animal caging system for supplying sand. The animal caging system comprises a container for holding sand, a conveyor connecting onto the container for transporting sand supplied from the container, at least one feed opening connecting onto the conveyor, wherein the feed opening forms a delivery point for sand. The system comprises further a sand-tight conveyor belt, wherein the feed opening of the supply device lies above the conveyor belt. A major drawback of the known system is that the animals will get bored relatively quickly, as the supply of sand will be regulated independent on the animals.

The present invention has for its object to provide a poultry caging system with which poultry can be kept efficiently in a relatively animal-friendly manner, in addition to a method for this purpose.

The present invention provides for this purpose a poultry caging system according to the preamble of claim 1, characterised in, that the poultry caging system (10, 18) also comprises actuating means (9, 26) adapted to be activated by individual animals to control the supply of litter.. The poultry caging system according to the invention has the advantage that it will result in the poultry being less bored, thus contributing to improved animal welfare. In order to provide the poultry with the possibility of making good contact with the litter and of actually bathing in the litter, the supply device in a housing system is combined with a litter-tight floor part which will retain the litter for at least a time. In many existing housing systems no measures, or only very simple ones, need be taken for this purpose. Litter can be supplied with such a device irrespective of the type of accommodation, whereby the poultry can take a dust-bath. So-called dust-bathing reduces the percentage of fat in the plumage of the "bathing" animal. A more natural behaviour of the animals can thus take place using the device despite the fact that these are perhaps being kept in coops or cages which may even be stacked. The reduction of the percentage of fat in the plumage is a clear indication that animal welfare is increased by means of the device according to the invention, although this has also been observed from behavioural studies, inter alia in the "communal housing system". A choice for a determined type of litter can be made subject to the poultry and other conditions. Good results can be achieved with sand, dust, wood shavings, wood sawdust, peat dust and mixtures thereof. It is also possible to add feed grains to the litter whereby the poultry can forage for these grains between the rest of the litter. This also contributes to an enhanced animal welfare.

The feed opening is preferably provided with a closing valve which is displaceable by means of actuating means between an opened and a closed position. In a variant the feed opening itself is movable so that it either releases litter or not. These actuating means can be coupled to a control and/or can be operated locally. It is thus possible to opt for supply of litter as required at determined times or supply can be made dependent on the behaviour of individual animals.
The conveyor is preferably formed by a transport chain, a conveyor belt, air transport tube system or transport screw. Such conveyors are available in many variants, are reliable and affordable.

In another preferred embodiment the floor part is formed by a flat carrier. Yet another preferred embodiment is formed by a conveyor belt which is provided with a drive for controlled stop-start movement thereof; the floor part is thus formed by a part of the conveyor belt. A flat carrier has the advantage that uncontrolled loss of litter does not take place. A drawback however is that it is recommended to discharge litter after a time in order to suppress the development of bacteria, fungi, viruses etc. in the litter. This is possible in very effective manner by means of the preferred embodiment in which a conveyor belt is incorporated which forms the floor part. By causing the conveyor belt to move the litter, with excrement which has possibly fallen therein, can be discharged at determined times.

The invention also provides a method for keeping poultry, comprising the steps of:
- placing the poultry in separated spaces,
- supplying litter to the separate spaces, and
- discharging the litter used by the poultry from the separate spaces. In a preferred method individual animals activate the supply of litter and/or the supply of litter is activated by a central control. The advantages as stated above can be realized by means of these methods.

The present invention will be further elucidated with reference to the non-limitative embodiments shown in the following figures. Herein:
fig. 1 shows a partly cut-away three-dimensional view of a device according to the
invention,
fig. 2 shows a view in cross-section through a communal housing system for chickens according to the invention in which the device of fig. 1 is incorporated, and
fig. 3 is a schematic perspective view of an alternative housing system according to the invention.

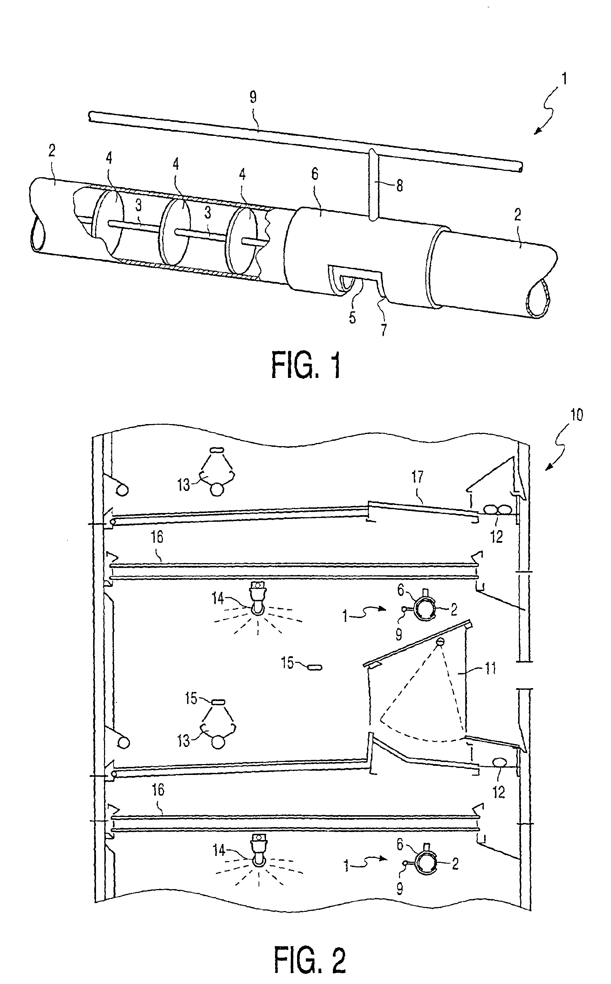

Fig. 1 shows a supply device 1. Supply device 1 consists of a tube 2 through which runs a transport cable 3, on which cable 3 are fixed discs 4. Discs 4 are accommodated close-fittingly in tube 2. Litter can be displaced through tube 2 by means of discs 4 by displacing transport cable 3.

An opening 5 is arranged at a determined position in tube 2. As transport cable 3 is moved through, litter pushed along by discs 4 will drop out of tube 2 at the position of opening 5. It is thus possible by operating transport cable 3 to determine when litter drops downward out of opening 5. In practice however, it will be desirable to supply litter at a plurality of positions by means of a single tube 2. For this purpose a sleeve is placed round tube 2 at the position of each of the recesses 5. Sleeve 6 is movable, in this case rotatable, relative to tube 2 and provided with a recess 7. By rotating sleeve 6 round tube 2 it is possible to reach a position as shown in the figure in which the recess 7 in sleeve 6 leaves clear the opening 5 in tube 2. In this position litter can be ejected by displacing transport cable 3. When sleeve 6 is rotated relative to tube 2 such that the opening 5 in tube 2 is no longer left clear by recess 7 in sleeve 6, no litter can be discharged. In the latter case supply device 1 is in a situation where transport cable 3 can be moved further along without litter being ejected. In this position it is therefore desirable to displace the cable such that all positions between discs 4 are refilled with litter. At the subsequent demand for litter the sleeve 6 can be rotated to the situation shown in fig. 1. The litter situated at that moment between discs 4 located on either side of opening 5 will then drop downward. If there is a greater demand for litter then or later, cable 3 can be moved along to a greater or lesser degree in accordance with the demand for litter. The advantage of sleeve 6 is that in this manner openings 5 can now be arranged in tube 2 at a plurality of positions, wherein tube 2 can be filled by rotating sleeve 6. The transport cable can then be moved still further along so that litter is released at all openings 5. This is only possible however as long as the total displacement of cable 3 corresponds at most to the distance between two openings 5.

In order to bring about rotation thereof the sleeve 6 is coupled by means of a connecting rod 8 to a control rod 9. A plurality of sleeves 6 can be displaced simultaneously by means of control rod 9. In a possible variant it is possible to rotate tube 2 relative to stationary sleeves 6. Opening 5 is then rotated upward as tube 2 is filled and is displaced downward for litter dispensing. It is also possible to displace the litter through tube 2 by means of blow air.

Fig. 2 shows a communal housing system 10 in which spaces are created on a plurality of levels for a number of animals. In each cage are arranged laying nests 11, the floor of which connects onto a discharge conveyor 12 for eggs. Also provided are feed gutters 13, lighting 14, perches 15 and manure conveyors 16. The collected excreta can be discharged by means of manure conveyors 16. Also included in this figure are supply devices 1 as shown in fig. 1 with which litter can be supplied. Openings 5 in tubes 2 of supply devices 1 must be placed in each case above a floor part 17 which can be used as free-range area. This floor part 17 can be manufactured from a structure through which litter can penetrate to some extent, so that some of the litter will drop onto manure conveyors 16 due to the foraging of the poultry. Litter which has been present in communal housing system 10 for some time can hereby be discharged by manure conveyors 16 together with the manure. Other constructions can however also be envisaged, for instance a construction, not shown in this figure, in which floor part 17 itself consists of a conveyor belt, or a construction in which floor part 17 is omitted and the poultry can forage directly on a part of conveyor belt 16.

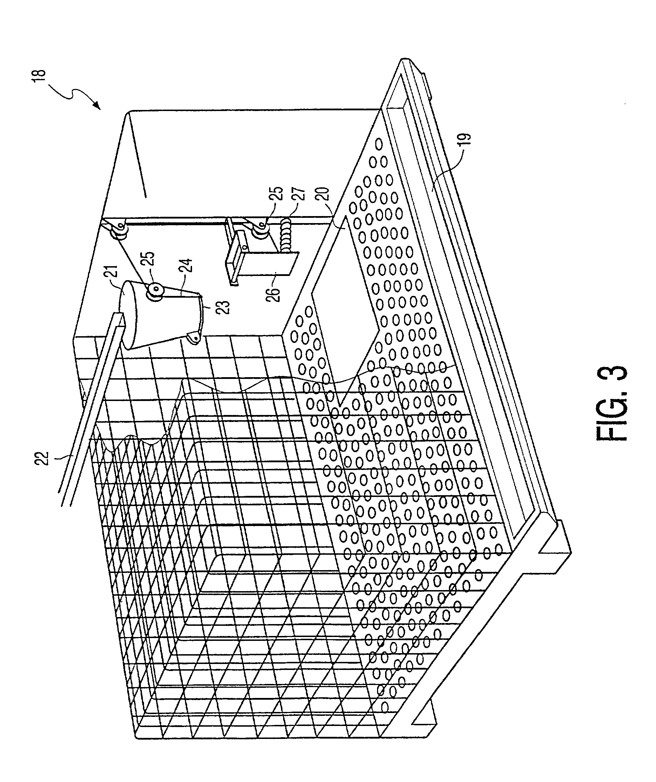

Fig. 3 shows a cage 18 for keeping poultry which is provided with a feed gutter 19. Situated in cage 18 is a floor part 20 above which is located a buffer 21 for containing litter. The litter is fed to buffer 21 by means of a conveyor belt 22.

Buffer 21 is provided with a flap 23 which is connected rotatably thereto and which in the situation shown here is in closed position. Engaging onto flap 23 is a cable 24 which is trained by means of guide wheels 25 to an actuating panel 26. In the non-loaded situation the actuating panel 26 is urged by means of a pressure spring 27 to a position in which cable 24 exerts a force on flap 23 such that it is in closed position. However, when poultry exerts a sufficiently great force on actuating panel 26 counter to the force exerted by pressure spring 27, the actuating panel 26 will rotate through a limited distance. The rotation of actuating panel 26 results in opening of flap 23. Litter will then drop out of buffer 21 onto floor part 20. The poultry situated in cage 18 can thus take action by means of actuating panel 26 such that litter is released. It is also possible using electronics identifying individual animals to cause the dispensing to take place on an individual basis.

It is possible to control and operate the device by electronic means, to combine the supply of litter with the supply of feed, to give the floor part on which the litter is supplied for instance a pivotable form so that litter can be regularly removed therefrom.

## Claims

1. Poultry caging system (10, 18) comprising:
- a device (1) for supplying litter such as for instance sand, dust, sawdust, peat dust and/or free-range feed to poultry caging systems, said device (1) comprising:
- a container for holding litter,
- a conveyor (3, 22) connecting onto the container for transporting litter supplied from the container,
- at least one feed opening (5, 7) connecting onto the conveyor (3, 22), which feed opening (5, 7) forms a delivery point for litter, and
- an at least substantially litter-tight floor part (17, 20), wherein the feed opening (5, 7) of the supply device (1) lies above the floor part (17, 20),
**characterised in, that** the poultry caging system (10, 18) also comprises actuating means (9, 26) adapted to be activated by individual animals to control the supply of litter.

2. Poultry caging system (10, 18) as claimed in claim 1, wherein the actuating means (9, 26) are positioned at a distance of the feed opening (5, 7).

3. Poultry caging system (10, 18) as claimed in claim 1 or 2, wherein the actuating means (9, 26) are located below the feed opening (5, 7).

4. Poultry caging system (10, 18) as claimed in any of the foregoing claims, wherein the feed opening (5, 7) is provided with a closing valve (6, 23) which is displaceable by the actuating means (9, 26) between an opened and a closed position.

5. Poultry caging system (10, 18) as claimed in any of the foregoing claims, wherein the actuating means (9, 26) are coupled to a control.

6. Poultry caging system (10, 18) as claimed in any of the foregoing claims, wherein the conveyor (3, 22) is formed by a transport chain.

7. Poultry caging system (10, 18) as claimed in any of the foregoing claims, wherein the conveyor (3, 22) is formed by a conveyor belt (22), air transport tube system or transport screw.

8. Poultry caging system (10, 18) as claimed in one of the foregoing claims, wherein the actuating means (9, 26) are located above the at least substantially litter-tight floor part (20).

9. Poultry caging system (10, 18) as claimed in one of the claims 1-8, wherein the floor part (17, 20) is formed by a mat.

10. Poultry caging system (10, 18) as claimed in one of the claims 1-8, wherein the floor part (17, 20) is formed by a flat carrier.

11. Poultry caging system (10, 18) as claimed in one of the foregoing claims, wherein the poultry caging system comprises a conveyor belt (22) which is provided with a drive for controlled stop-start movement thereof, wherein the floor part (17, 20) is formed by a part of the conveyor belt (22).

12. Method for keeping poultry, comprising the steps of:
- placing the poultry in separated spaces,
- supplying litter to the separate spaces, and
- discharging the litter used by the poultry from the separate spaces,
**characterised in that** the supplying of litter occurs by activating the supply of litter by individual animals at a distance of the supply of litter.

13. Method as claimed in claim 12, wherein the supply of litter is activated by a central control.

## Patentansprüche

1. Käfiganlage für Geflügel (10, 18) bestehend aus:
- einer Vorrichtung (1) zur Zufuhr von Streu wie zum Beispiel Sand, Staub, Sägemehl, Torfmull und/oder Freilandfutter zu Käfiganlagen für Geflügel, besagte Vorrichtung (1) umfaßt:
- einen Behälter zur Aufnahme von Streu,
- eine Fördervorrichtung (3, 22), die mit dem Behälter zum Transport der von dem Behälter bereit gestellten Streu verbunden ist,
- mindestens eine Zufuhröffnung (5, 7), die mit dem Behälter (3, 22) verbunden ist, welche Zufuhröffnung (5, 7) einen Zufuhrpunkt für Streu darstellt, und
- ein zumindest im wesentlichen für Streu undurchlässiges Bodenteil (17, 20), wobei die Zufuhröffnung (5, 7) der Zufuhrvorrichtung (1) über dem Bodenteil (17, 20) liegt,
**dadurch gekennzeichnet, dass** die Käfiganiage fur Geflugel (10, 18) auch Betätigungsmittel (9, 26) umfasst, die geeignet sind, für die Steuerung der Streuzufuhr von einzelnen Tieren aktiviert zu werden.

2. Käfiganlage für Geflügel (10, 18) nach Anspruch 1, wobei die Betätigungsmittel (9, 26) sich in einem Abstand von der Zufuhröffnung (5, 7) befinden.

3. Käfiganlage für Geflügel (10, 18) nach Anspruch 1 oder 2, wobei die Betätigungsmittel (9, 26) unter der Zufuhröffnung (5, 7) liegen.

4. Käfiganlage für Geflügel (10, 18) nach irgendeinem der vorhergehenden Ansprüche, wobei die Zufuhröffnung (5, 7) mit einem Schließventil (6,23) versehen ist, das durch die Betätigungsmittel (9, 26) zwischen einer offenen und einer geschlossenen Position verstellt werden kann.

5. Käfiganlage für Geflügel (10, 18) nach irgendeinem der vorhergehenden Ansprüche, wobei die Betätigungsmittel (9, 26) mit einer Steuerung gekuppelt sind.

6. Käfiganlage für Geflügel (10, 18) nach irgendeinem der vorhergehenden Ansprüche, wobei die Fördervorrichtung (3, 22) von einer Transportkette gebildet wird.

7. Käfiganlage für Geflügel (10, 18) nach irgendeinem der vorhergehenden Ansprüche, wobei die Fördervorrichtung (3, 22) von einem Förderband (22), einem Lufttransportrohrsystem oder einer Förderschnecke gebildet wird.

8. Käfiganlage für Geflügel (10, 18) nach irgendeinem der vorhergehenden Ansprüche, wobei sich die Betätigungsmittel (9, 26) über dem zumindest im wesentlichen für Streu undurchlässigen Bodenteil (20) befinden.

9. Käfiganlage für Geflügel (10, 18) nach einem der Ansprüche 1-8, wobei das Bodenteil (17, 20) von einer Matte gebildet wird.

10. Käfiganlage für Geflügel (10, 18) nach einem der Ansprüche 1-8, wobei das Bodenteil (17, 20) von einem flachen Träger gebildet wird.

11. Käfiganlage für Geflügel (10, 18) nach irgendeinem der vorhergehenden Ansprüche, wobei die Käfiganlage für Geflügel ein Förderband (22) umfasst, das mit einem Antrieb für eine kontrollierte Start-Stoppbewegung hiervon versehen ist, wobei das Bodenteil (17, 20) von einem Teil des Förderbandes (22) gebildet wird.

12. Verfahren zur Geflügelzucht, das aus den folgenden Schritten besteht:
- Setzen des Geflügels in getrennte Räume,
- Zufuhr von Streu in die getrennten Räume und
- Entfernen der von dem Geflügel verbrauchten Streu aus den getrennten Räumen,
**dadurch gekennzeichnet, dass** die Zufuhr der Streu durch Aktivieren der Streuzufuhr durch die einzelnen Tiere in einem Abstand von der Streuzufuhr geschieht.

13. Verfahren nach Anspruch 12, wobei die Zufuhr der Streu von einer zentralen Steuereinrichtung aktiviert wird.

## Revendications

1. Système d'encagement de volaille (10, 18) comprenant :
- un dispositif (1) pour acheminer de la litière telle que, par exemple, du sable, de la poudre, de la sciure, de la poudre de tourbe, et/ou de l'alimentation de type élevage en liberté vers des systèmes d'encagement de volaille, ledit dispositif (1) comprenant :
- un conteneur pour conserver la litière ;
- un convoyeur (3, 22) relié au conteneur pour transporter la litière acheminée du conteneur ;
- au moins une ouverture d'alimentation (5, 7) reliée au convoyeur (3, 22), laquelle ouverture d'alimentation (5, 7) forme un point de livraison de la litière, et
- un élément de plancher (17, 20) au moins sensiblement étanche à la litière dans lequel l'ouverture d'alimentation (5, 7) du dispositif d'acheminement (1) se trouve au-dessus de l'élément de plancher (17, 20),
**caractérisé en ce que** le système d'encagement de volaille (10, 18) comprend aussi des moyens d'actionnement (9, 26) adaptés pour être activés par des animaux individuels pour commander le dispositif d'acheminement de la litière.

2. Système d'encagement de volaille (10, 18) selon la revendication 1, dans lequel les moyens d'actionnement (9, 26) sont positionnés à une certaine distance de l'ouverture d'alimentation (5, 7).

3. Système d'encagement de volaille (10, 18) selon la revendication 1 ou 2, dans lequel les moyens d'actionnement (9, 26) sont situés sous l'ouverture d'alimentation (5, 7).

4. Système d'encagement de volaille (10, 18) selon l'une quelconque des revendications précédentes, dans lequel l'ouverture d'alimentation (5, 7) est pourvue d'un clapet de fermeture (6, 23) qui est déplaçable par les moyens d'actionnement (9, 26) entre une position ouverte et une position fermée.

5. Système d'encagement de volaille (10, 18) selon l'une quelconque des revendications précédentes, dans lequel les moyens d'actionnement (9, 26) sont couplés à une commande.

6. Système d'encagement de volaille (10, 18) selon l'une quelconque des revendications précédentes, dans lequel le convoyeur (3, 22) est formé par une chaîne transporteuse.

7. Système d'encagement de volaille (10, 18) selon l'une quelconque des revendications précédentes, dans lequel le convoyeur (3, 22) est formé par une bande transporteuse (22), un système de tubes de transport pneumatique ou une vis transporteuse.

8. Système d'encagement de volaille (10, 18) selon l'une quelconque des revendications précédentes, dans lequel les moyens d'actionnement (9, 26) sont situés au-dessus de l'élément de plancher (20) au moins sensiblement étanche à la litière.

9. Système d'encagement de volaille (10, 18) selon l'une quelconque des revendications 1 à 8, dans lequel l'élément de plancher (17, 20) est formé par un mat.

10. Système d'encagement de volaille (10, 18) selon l'une quelconque des revendications 1 à 8, dans lequel l'élément de plancher (17, 20) est formé par un transporteur à plate-forme.

11. Système d'encagement de volaille (10, 18) selon l'une quelconque des revendications précédentes, dans lequel le système d'encagement de volaille comprend une bande transporteuse (22) qui est pourvue d'un entraînement pour commander le mouvement d'arrêt-de marche de celle-ci, l'élément de plancher (17, 20) étant formé par une partie de la bande transporteuse (22).

12. Procédé pour élever de la volaille, comprenant les étapes consistant à :
- placer la volaille dans des espaces séparés ;
- acheminer de la litière vers les espaces séparés, et
- évacuer la litière utilisée par la volaille à partir des espaces séparés,
**caractérisé en ce que** l'acheminement de la litière se fait par activation du dispositif d'acheminement de la litière par des animaux individuels à une certaine distance du dispositif d'acheminement de la litière.

13. Procédé selon la revendication 12, dans lequel le dispositif d'acheminement de la litière est activé par une commande centrale.
